# EUROPÄISCHE PATENTSCHRIFT

(11) **EP 4 112 392 B1**
(45) Veröffentlichungstag und Bekanntmachung des Hinweises auf die Patenterteilung: **08.10.2025**
(21) Anmeldenummer: 22182166.3
(22) Anmeldetag: 30.06.2022
(51) Int. Cl.: B60R 21/015, G08G 1/00

(54) **VERFAHREN ZUM LIEFERN VON AGGREGIERTEN DATEN UND FAHRZEUG**
METHOD FOR SUPPLYING AGGREGATED DATA AND VEHICLE
PROCÉDÉ DE FOURNITURE DES DONNÉES AGRÉGÉES ET VÉHICULE

(30) Priorität: 02.07.2021 DE 102021206992
(43) Veröffentlichungstag der Anmeldung: 04.01.2023
(73) Patentinhaber: Continental Automotive Technologies GmbH, 30175 Hannover (DE)
(72) Erfinder: Muralidharan, Vishal, 560100 Bangalore (IN)
(74) Vertreter: Aumovio Corporation

(56) Entgegenhaltungen:
- DE-A1- 102006 031 240
- DE-A1- 102016 103 638
- DE-A1- 102020 110 445
- US-B1- 11 010 840

## Beschreibung

Die Erfindung betrifft ein Verfahren zum Liefern von aggregierten Daten nach einem Zusammenstoßereignis eines offenen Fahrzeugs sowie ein offenes Fahrzeug zur Ausführung eines solchen Verfahrens.

Zusammenstoßereignisse treten im Straßenverkehr häufig auf. Derartige Zusammenstoßereignisse treten typischerweise zwischen zwei oder mehr Fahrzeugen auf, welche meistens bei dem Zusammenstoßereignis auch beschädigt werden. Während Fahrer umschlossener vierrädriger Kraftfahrzeuge typischerweise vom umgebenen Fahrzeug vergleichsweise gut geschützt sind, sind Fahrer offener und/oder zweirädriger Kraftfahrzeuge typischerweise einem höheren Risiko eines persönlichen Schadens ausgesetzt.

In der DE 10 2016 103 638 A1 ist ein Verfahren zur Zustandsbestimmung eines verunfallten Benutzers eines Fahrzeuges gezeigt, bei dem nach Erkennen einer kritischen Situation des Benutzers und/oder des Fahrzeuges, der Abstand zwischen Benutzer und Fahrzeug ermittelt und ein Zustandes des Benutzers in Abhängigkeit des Abstandes zwischen Benutzer und Fahrzeug bestimmt wird und anschließend eine Nachricht ausgesendet wird, wobei die Art und/oder der Inhalt der Nachricht in Abhängigkeit des Zustandes des Benutzers generiert werden.

Dementsprechend kann es vorteilhaft sein, Daten bezüglich eines solchen Fahrers und/oder eines Zusammenstoßereignisses, an welchem ein solcher Fahrer beteiligt war, in vorteilhafter Weise zur Verfügung zu stellen.

Dies wird erfindungsgemäß durch ein Verfahren sowie ein offenes Fahrzeug gemäß den jeweiligen Hauptansprüchen erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Verfahren zum Liefern von aggregierten Daten nach einem Zusammenstoßereignis eines offenen Fahrzeugs, wobei das Verfahren folgende Schritte aufweist:
- Bestimmen einer Position des Fahrzeugs,
- Bestimmen von einem oder mehreren von Fahrerposition nach dem Zusammenstoß, Zusammenstoßintensität und Fahrergesundheitszustand,
- Bilden von aggregierten Daten basierend auf der bestimmten Position und der bestimmten Fahrerposition nach dem Zusammenstoß, Zusammenstoßintensität und/oder Fahrergesundheitszustand, und
- Senden der aggregierten Daten zu einem Empfänger.

Die Zusammenstoßintensität wird in eine von vier Klassen klassifiziert.

Die Zusammenstoßintensität wird in eine erste Klasse klassifiziert, wenn ein Beschleunigungssensor einen Zusammenstoß mit niedriger Geschwindigkeit anzeigt und ein Schallsensor eine Anzahl von Zusammenstößen unterhalb eines Kollisionsschwellenwerts anzeigt. Die Zusammenstoßintensität wird in eine zweite Klasse klassifiziert, wenn ein Beschleunigungssensor einen Zusammenstoß mit niedriger Geschwindigkeit anzeigt und ein Schallsensor eine Anzahl von Zusammenstößen mindestens so groß wie der Kollisionsschwellenwert anzeigt. Die Zusammenstoßintensität wird in eine dritte Klasse klassifiziert, wenn ein Beschleunigungssensor einen Zusammenstoß mit hoher Geschwindigkeit anzeigt und ein Schallsensor eine Anzahl von Zusammenstößen unterhalb des Kollisionsschwellenwerts anzeigt. Die Zusammenstoßintensität wird in eine vierte Klasse klassifiziert, wenn ein Beschleunigungssensor einen Zusammenstoß mit hoher Geschwindigkeit anzeigt und ein Schallsensor eine Anzahl von Zusammenstößen mindestens so groß wie der Kollisionsschwellenwert anzeigt.

Mittels eines solchen Verfahrens können Daten aggregiert aufbereitet und an einen geeigneten Empfänger weitergeleitet werden, welche dabei helfen können, bei einem Zusammenstoßereignis eines offenen Kraftfahrzeugs schnell Hilfe zu leisten. Dadurch können beispielsweise Rettungsmaßnahmen beschleunigt werden.

Die aggregierten Daten können beispielsweise in einer Nachricht oder in mehreren Nachrichten bereitgestellt und gesendet werden.

Bei dem offenen Fahrzeug kann es sich insbesondere um ein zweirädriges Kraftfahrzeug wie beispielsweise einen Roller oder ein Motorrad handeln. Der Anbau eines Seitenwagens oder das Anhängen eines Anhängers sei dabei von dem Begriff eines zweirädrigen Kraftfahrzeugs umfasst. Grundsätzlich kann das hierin beschriebene Verfahren auch auf andere Fahrzeuge angewendet werden, welche beispielsweise drei oder vier Räder haben und in welchen der Fahrer auf einem offenen, weitgehend unumschlossenen Sitz sitzt und bei welchen ähnliche Gegebenheiten auftreten können wie bei zweirädrigen Fahrzeugen. Beispielsweise kann es sich dabei um Trikes oder Quads handeln. Grundsätzlich kann unter einem offenen Fahrzeug insbesondere ein Fahrzeug verstanden werden, bei welchem der Fahrer seitlich weitgehend nicht umschlossen ist und/oder bei welchem der Fahrer im Fall eines Zusammenstoßes von einem Sitz geschleudert werden kann und dann entfernt vom Fahrzeug ist.

Die Position des Fahrzeugs ist typischerweise diejenige Position, an welcher sich das Fahrzeug selbst nach dem Zusammenstoßereignis aufhält. Diese kann beispielsweise mittels eines Satellitennavigationsgeräts bestimmt werden.

Die Fahrerposition kann insbesondere von der Position des Fahrzeugs unabhängig sein und ist von dieser zu unterscheiden. Offene oder zweirädrige Fahrzeuge sind typischerweise weit weniger als vierrädrige oder umschlossene Fahrzeuge dazu in der Lage, einen Fahrer nach einem Zusammenstoßereignis in Position zu halten, so dass der Fahrer sich häufig nach dem Zusammenstoßereignis entfernt vom Fahrzeug befindet. Die Fahrerposition kann insbesondere relativ zum Fahrzeug bestimmt werden. Die Zusammenstoßintensität charakterisiert typischerweise die Schwere eines Zusammenstoßereignisses. Der Fahrergesundheitszustand bezieht sich auf den Fahrer, welcher vor dem Zusammenstoßereignis das Fahrzeug gefahren hat, und charakterisiert gesundheitsbezogene Informationen. Es sei verstanden, dass für den Fall, dass sich zwei oder mehr Personen auf dem Fahrzeug vor dem Zusammenstoßereignis befunden haben, die hier für einen Fahrer und dessen Gesundheitszustand beschriebenen Maßnahmen ebenso für mehrere Personen durchgeführt werden können.

Die aggregierten Daten beschreiben gemäß der hierin beschriebenen Ausführung grundsätzlich die Position des Fahrzeugs. Diese ist grundsätzlich sinnvoll, um den Ort des Fahrzeugs zu ermitteln und dadurch in der Regel auch zu wissen, wo sich ein Zusammenstoßereignis ereignet hat. Dies erleichtert das Einleiten von Rettungsmaßnahmen.

Durch die vorstehend beschriebene Klassifizierung kann eine sinnvolle Klassifizierung der Zusammenstoßintensität erfolgen, welche sowohl über die Geschwindigkeit wie auch über die Anzahl der Zusammenstöße Auskunft gibt und damit Hinweise auf einzuleitende Rettungsmaßnahmen gibt.

Bei den Daten Fahrerposition nach dem Zusammenstoß, Zusammenstoßintensität und Fahrergesundheitszustand können eine dieser Daten, zwei dieser Daten oder alle drei dieser Daten verwendet werden. Vorteilhaft werden alle drei verwendet.

Das Senden kann beispielsweise über ein Mobilfunknetz, ein anderes Funknetz oder über eine andere geeignete Möglichkeit zur Datenübertragung erfolgen. Insbesondere kann das Senden automatisiert und/oder elektronisch erfolgen.

Gemäß einer bevorzugten Ausführung werden die Fahrerposition nach dem Zusammenstoß, die Zusammenstoßintensität und der Fahrergesundheitszustand bestimmt und die aggregierten Daten basierend darauf gebildet. Dies erlaubt eine besonders umfangreiche Information über das Zusammenstoßereignis und hilft besonders vorteilhaft bei einzuleitenden Rettungsmaßnahmen.

Die Fahrerposition kann insbesondere nach dem Zusammenstoß bestimmt werden
- unter Verwendung eines Funkmoduls in dem Fahrzeug und eines Funkmoduls, welches von dem Fahrer getragen wird,
   und/oder
- unter Verwendung eines Drucksensors, welcher sensiert, ob der Fahrer auf einem Sitz positioniert ist.

Der erwähnte Drucksensor kann insbesondere eine Ja/Nein-Entscheidung treffen, ob der Fahrer noch auf dem für ihn vorgesehenen Sitz sitzt. Die erwähnten Funkmodule können insbesondere bestimmen, wie groß die Entfernung des Fahrers zum Fahrzeug ist, wobei bei Zusammenstoßereignissen mit offenen Fahrzeugen die Fahrer grundsätzlich vom Sitz weggeschleudert werden können und sich deshalb nach dem Zusammenstoßereignis entfernt vom Fahrzeug befinden. Durch geeignete Funkmodule kann der Abstand zwischen Fahrer und Fahrzeug bestimmt oder zumindest klassifiziert werden.

Die Zusammenstoßintensität kann insbesondere bestimmt werden
- unter Verwendung mindestens eines Beschleunigungssensors,
   und/oder
- unter Verwendung mindestens eines Schallsensors.

Ein Beschleunigungssensor kann beispielsweise eine Verzögerung beim Zusammenstoßereignis bestimmen, wobei aus einer hohen Verzögerung auf eine besonders schwere Intensität geschlossen werden kann. Ein Schallsensor kann beispielsweise bestimmen, wenn bei einem Zusammenstoßereignis Lärm erzeugt wird, wobei dadurch auch bestimmt werden kann, wie viele Zusammenstöße passiert sind und/oder wie viele Fahrzeuge an dem Zusammenstoßereignis beteiligt waren.

Der Fahrergesundheitszustand kann insbesondere unter Verwendung eines Pulsratensensors bestimmt werden. Dieser kann beispielsweise vom Fahrer im Helm oder am Handgelenk getragen werden. Dadurch kann die aktuelle Herzaktivität des Fahrers bestimmt werden, wobei eine normale Herzaktivität typischerweise einen Hinweis auf einen verhältnismäßig guten Gesundheitszustand gibt, wohingegen beispielsweise ein fehlender Puls einen Hinweis auf die Notwendigkeit einer sofortigen Reanimation geben kann.

Die Fahrerposition nach dem Zusammenstoß kann insbesondere in eine von drei Klassen klassifiziert werden, welche eine Distanz zwischen dem Fahrer und dem Fahrzeug nach dem Zusammenstoßereignis anzeigen. Dadurch kann eine klassifizierte Auswertung erfolgen, was einen schnelleren Überblick über ein Zusammenstoßereignis geben kann. Dies gilt auch für andere, weiter unten noch beschriebene Daten, welche klassifiziert werden können.

Die Fahrerposition nach dem Zusammenstoß kann in eine erste Klasse klassifiziert werden, wenn ein Drucksensor anzeigt, dass der Fahrer auf dem Fahrzeug sitzt. Die Fahrerposition nach dem Zusammenstoß kann in eine zweite Klasse klassifiziert werden, wenn ein Drucksensor anzeigt, dass der Fahrer nicht auf dem Fahrzeug sitzt, und Funkmodule anzeigen, dass eine Distanz zwischen dem Fahrzeug und dem Fahrer unter einem Distanzschwellenwert ist. Dabei kann es sich beispielsweise um die weiter oben bereits beschriebenen Funkmodule handeln. Die Fahrerposition nach dem Zusammenstoß kann in eine dritte Klasse klassifiziert werden, wenn ein Drucksensor anzeigt, dass der Fahrer nicht auf dem Fahrzeug sitzt, und Funkmodule anzeigen, dass eine Distanz zwischen dem Fahrzeug und dem Fahrer mindestens so groß ist wie der Distanzschwellenwert.

Durch die eben beschriebene Einteilung in eine von drei möglichen Klassen kann angezeigt werden, wo mit dem Fahrer zu rechnen ist, und es kann letztlich auch ein Rückschluss auf die Schwere des Zusammenstoßes erfolgen, da bei einem schweren Zusammenstoß davon auszugehen ist, dass der Fahrer weit vom Fahrzeug entfernt liegt. Die erste Klasse kann insbesondere anzeigen, dass der Fahrer noch auf dem Fahrzeug sitzt und somit von nur geringen Schäden und/oder nur einer geringen gesundheitlichen Beeinträchtigung des Fahrers auszugehen ist.

Der Beschleunigungssensor kann insbesondere einen Zusammenstoß mit niedriger Geschwindigkeit anzeigen, wenn eine maximale Beschleunigung während eines Zusammenstoßereignisses unter einem Beschleunigungsschwellenwert ist. Der Beschleunigungssensor kann insbesondere einen Zusammenstoß bei hoher Geschwindigkeit anzeigen, wenn eine maximale Beschleunigung während eines Zusammenstoßereignisses mindestens so groß wie der Beschleunigungsschwellenwert ist. Dies erlaubt eine einfache Klassifizierung der Beschleunigung bzw. Geschwindigkeit.

Der Schallsensor kann insbesondere einen Zusammenstoß jedes Mal anzeigen, wenn die Schallintensität einen Schallschwellenwert übersteigt. Dadurch kann in einfacher Weise erkannt werden, wie viele Zusammenstöße erfolgen. Typischerweise steigt die Schallintensität bei einem Zusammenstoß zunächst über den Schwellenwert und geht unmittelbar danach wieder unter den Schwellenwert. Erfolgt ein erneuter Zusammenstoß, wird der Schallschwellenwert erneut überschritten. Dies erlaubt eine separate Bestimmung von Zusammenstößen.

Der Fahrergesundheitszustand kann insbesondere in eine von drei Klassen klassifiziert werden. Diese Klassifizierung kann beispielsweise anhand einer Pulsrate des Fahrers erfolgen, wobei für jede der drei Klassen geeignete Pulsratenschwellenwerte definiert werden können. Dadurch kann ein einfacher Rückschluss auf den unmittelbaren Gesundheitszustand des Fahrers erfolgen.

Es sei verstanden, dass grundsätzlich auch die Verwendung von mehr oder weniger Klassen als jeweils angegeben möglich ist. Die angegebenen Anzahlen haben sich jedoch als vorteilhaft erwiesen.

Bevorzugt werden eines oder mehrere Muster definiert, wobei jedes Muster eine Kombination von Klassen definiert. Die aggregierten Daten können zu einem bestimmten Empfänger weitergeleitet werden, welcher dem Muster zugeordnet ist, wenn alle Parameter in einer Klasse klassifiziert sind, welche in Kombination durch das Muster definiert werden. Dies erlaubt eine Definition solcher Muster, um in geeigneter Weise festzulegen, an wen bestimmte Zusammenstöße gemeldet werden. Beispielsweise können Muster so definiert werden, dass sie nur Zusammenstöße erfassen, bei welchen die erwähnten Parameter so klassifiziert sind, dass eine besonders hohe Wahrscheinlichkeit für die Notwendigkeit sehr schneller Rettungsmaßnahmen vorhanden ist. Über derartige Zusammenstoßereignisse können dann beispielsweise unmittelbar Rettungsleitstellen informiert werden.

Die aggregierten Daten können gemäß einer möglichen Ausführung mit Bezug auf Fahrerposition nach dem Zusammenstoß, Zusammenstoßintensität und Fahrergesundheitszustand nur aus Indikationen von Klassen gebildet werden, in welchen die Fahrerposition nach dem Zusammenstoß, die Zusammenstoßintensität und der Fahrergesundheitszustand klassifiziert wurden. Anders ausgedrückt werden nicht die eigentlich aufgenommenen Daten aggregiert, sondern Hinweise auf Klassen, in welche diese Daten aggregiert wurden. Dies kann insbesondere wie weiter oben bereits beschrieben erfolgen.

Die Position kann insbesondere unter Verwendung eines Satellitennavigationssystems in dem Fahrzeug bestimmt werden. Derartige Satellitennavigationssysteme sind bei zahlreichen Fahrzeugen vorhanden und können hier verwendet werden, um die Position zu bestimmen und damit Rettungskräften einen Hinweis darauf zu geben, wo das Zusammenstoßereignis stattgefunden hat.

Die Erfindung betrifft des Weiteren ein offenes Fahrzeug, mit einem Beschleunigungssensor und einem Schallsensor, wobei das offene Fahrzeug konfiguriert ist, um ein Verfahren gemäß einem der Ansprüche 1-13 auszuführen, wobei die Daten des Beschleunigungssensor und des Schallsensors zur Klassifizierung der Zusammenstoßintensität verwendet werden.

Bei den beschriebenen Klassifizierungen sind insgesamt 36 mögliche Kombinationen von Klassifizierungen denkbar. Dies erleichtert die Kommunikation mit möglichen Empfängern wie beispielsweise Rettungsleitstellen, Polizeidienststellen, Versicherungsagenturen, Werkstätten und Notfallnummern, welche wie bereits erwähnt gezielt informiert werden können und/oder ein schnelles Bild über das Unfallereignis erhalten.

Weitere Merkmale und Vorteile wird der Fachmann dem nachfolgend mit Bezug auf die beigefügte Zeichnung beschriebenen Ausführungsbeispiel entnehmen. Dabei zeigen:
- Fig. 1:: ein Fahrzeug und einen Fahrer,
- Fig. 2:: eine grundsätzliche Vorgehensweise bei der Datenverarbeitung,
- Fig. 3:: eine Vorgehensweise bei der Klassifizierung, und
- Fig. 4:: eine Vorgehensweise bei der Bildung von Mustern.

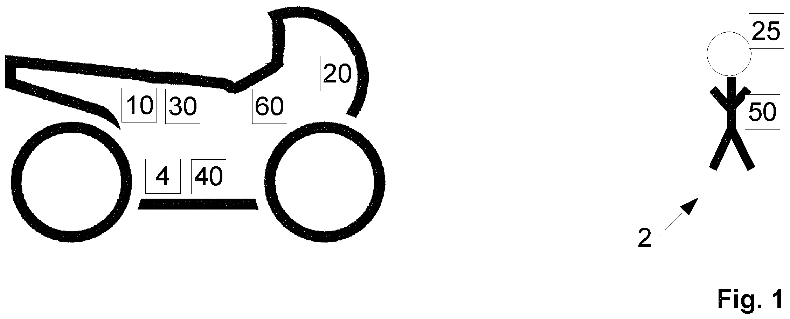

Fig. 1 zeigt rein schematisch ein offenes Fahrzeug 1 sowie einen Fahrer 2. Der Fahrer 2 befindet sich in dem gezeigten Zustand entfernt vom Fahrzeug 1, da ein Zustand nach einem Zusammenstoß gezeigt ist, bei welchem der Fahrer 2 vom Fahrzeug 1 geschleudert wurde. In typischen derartigen Situationen liegt der Fahrer 2 entfernt vom Fahrzeug 1 auf dem Boden. Das Fahrzeug 1 weist ein Satellitennavigationssystem 10 auf, welches die Position des Fahrzeugs 1 bestimmen kann. Das Fahrzeug 1 weist ein Funkmodul 20 auf, welches mit einem weiteren Funkmodul 25 kommunizieren kann, wobei letzteres schematisch beim Fahrer 2 gezeigt ist. Dieses kann sich beispielsweise in einem Helm befinden. Die beiden Funkmodule 20, 25 können miteinander Funksignale austauschen und dadurch den Abstand zwischen Fahrzeug 1 und Fahrer 2 bestimmen. Das Funkmodul 20 gibt somit eine Information über die Entfernung, welche wie weiter unten beschrieben ausgewertet werden kann. Das Fahrzeug 1 weist einen Drucksensor 30 auf, welcher bestimmen kann, ob der Fahrer 2 auf dem Fahrzeug 1 sitzt. Das Fahrzeug 1 weist einen Beschleunigungssensor 40 auf, welcher eine Beschleunigung oder Verzögerung des Fahrzeugs 1 messen kann. An dem Fahrer 2 ist ein Pulsratensensor 50 gezeigt, welcher beispielsweise in einer Uhr oder einem anderen am Körper getragenen Gerät ausgebildet sein kann. Damit wird die Pulsrate des Fahrers 2 gemessen und über eine Funkverbindung an das Fahrzeug 1 zurückgemeldet. Das Fahrzeug 1 weist ferner einen Schallsensor 60 auf, welcher Schall aus der Umgebung aufnimmt. Die genannten Elemente 10, 20, 25, 30, 40, 50, 60 sind Sensoren des Fahrzeugs 1 und des Fahrers 2.

Das Fahrzeug 1 weist ferner eine Verarbeitungseinheit 4 auf, welche gewonnene Daten auswertet und gegebenenfalls weiterleitet und deren Funktionalität nachfolgend beschrieben wird.

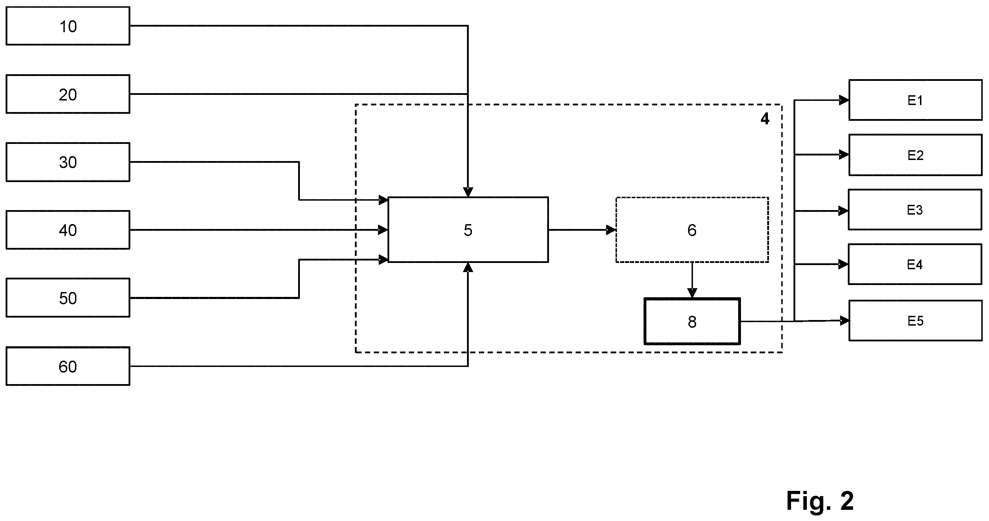

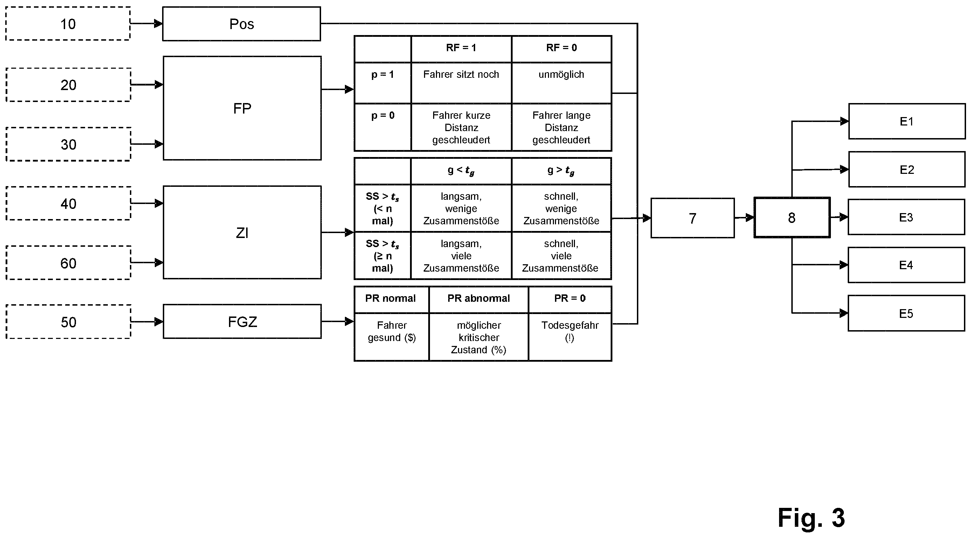

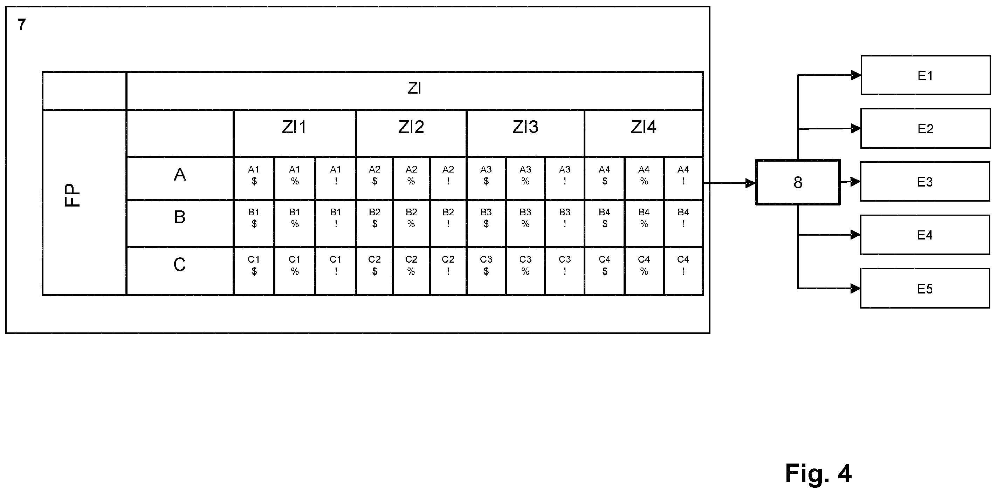

Fig. 2 zeigt die Verarbeitungseinheit 4 in größerer Detailliertheit. Die Verarbeitungseinheit 4 weist ein Datenaufnahmemodul 5 auf, zu welchem Daten der bereits mit Bezug auf Fig. 1 beschriebenen Sensoren 10, 20, 30, 40, 50, 60 geliefert werden. Diese Daten werden an ein Auswertungsmodul 6 weitergeleitet, wo die weiter unten mit Bezug auf Fig. 3 und Fig. 4 beschriebenen Verarbeitungsschritte durchgeführt werden. Daraus gewonnene Daten werden an ein Kommunikationsmodul 8 weitergeleitet, welches die Daten zu einem oder mehreren Empfängern E weiterleiten kann. Vorliegend sind dabei beispielhaft als erster Empfänger E1 eine Rettungsleitstelle, als zweiter Empfänger E2 eine Polizeidienststelle, als dritter Empfänger E3 eine Versicherungsagentur, als vierter Empfänger E4 eine Werkstatt und als fünfter Empfänger E5 eine Notfallnummer aufgeführt. Eine Notfallnummer kann insbesondere eine Nummer einer engen Kontaktperson sein, welche im Fall einer schweren körperlichen Schädigung des Fahrers 2 informiert werden soll.

In Fig. 3 sind links zunächst neben den Sensoren 10, 20, 30, 40, 50, 60 die daraus gewonnenen Daten dargestellt, nämlich Position (Pos), Fahrerposition (FP), Zusammenstoßintensität (ZI) und Fahrergesundheitszustand (FGZ).

Die Position Pos wird unmittelbar an ein Entscheidungsmodul 7 weitergeleitet, welches über eine eventuelle Weiterleitung von Daten entscheidet, beispielsweise wie nachfolgend mit Bezug auf Fig. 4 beschrieben.

Die Daten des Drucksensors 30 und des Funkmoduls 20, ggf. auch des weiteren Funkmoduls 25, werden zur Klassifizierung der Fahrerposition FP verwendet. Mit einem Parameter p wird dabei angegeben, ob der Drucksensor 30 ein Sitzen des Fahrers 2 auf dem Fahrzeug 1 detektiert (1) oder nicht (0). Mit einem Parameter RF wird angegeben, ob das Funkmodul 20 eine kurze Distanz (1) oder eine lange Distanz (0) anzeigt. Dementsprechend sind drei Klassen möglich, welche in Fig. 3 eingetragen sind, nämlich "Fahrer sitzt noch" (erste Klasse), "Fahrer kurze Distanz geschleudert" (zweite Klasse) und "Fahrer lange Distanz geschleudert" (dritte Klasse). Die Option im rechten oberen Feld, welche zu einem sitzenden Fahrer korrespondieren würde, der aber über eine lange Distanz geschleudert wurde, ist in der Praxis unmöglich.

Daten des Beschleunigungssensors 40 und des Schallsensors 60 werden zur Klassifizierung der Zusammenstoßintensität verwendet. Dabei wird mittels des Schallsensors 60 ermittelt, wann immer eine gemessene Schallintensität (SS) einen Intensitätsschwellenwert ts überschreitet. Dies wird als ein Zusammenstoßereignis gewertet. In der diesbezüglich angegebenen Matrix wird in der linken Spalte unterschieden, wie oft die Schallintensität (SS) größer als der Intensitätsschwellenwert ts ist, wobei ein Vergleich mit einem Kollisionsschwellenwert n erfolgt. Des Weiteren wird der Beschleunigungssensor 30 auf eine Beschleunigung g ausgewertet, welche typischerweise eine Verzögerung ist, wobei diese wie gezeigt daraufhin ausgewertet wird, ob sie kleiner oder größer als ein Beschleunigungsschwellenwert t_{g} ist. Dementsprechend kann die Zusammenstoßintensität in eine von vier Klassen klassifiziert werden, nämlich "langsam, wenige Zusammenstöße" (erste Klasse), "langsam, viele Zusammenstöße" (zweite Klasse), "schnell, wenige Zusammenstöße" (dritte Klasse), und "schnell, viele Zusammenstöße" (vierte Klasse).

Daten des Pulsratensensors 50 werden zur Klassifizierung des Fahrergesundheitszustands FGZ verwendet, und zwar in eine von drei Klassen. Hat der Fahrer eine normale Pulsrate, wird die Klasse "PR normal" verwendet. Ist ein abnormaler Puls vorhanden, was einen möglichen kritischen Zustand anzeigt, wird die Klasse "PR abnormal" verwendet. Wird kein Puls mehr detektiert, wird die Klasse "PR = 0" verwendet, was auf eine mögliche Todesgefahr hinweist. Dies erlaubt Rettungskräften eine schnelle Einschätzung des Fahrergesundheitszustands, so dass Rettungsmaßnahmen gleich vorbereitet werden können. Wie in Fig. 3 zu sehen ist, sind diese drei Klassen mit drei Symbolen gekennzeichnet, welche nachfolgend auch in Fig. 4 verwendet werden, nämlich "$" für "PR normal" (erste Klasse), "%" für "PR abnormal" (zweite Klasse) und "!" für "PR = 0" (dritte Klasse).

Das Entscheidungsmodul 7 entscheidet, wie die klassifizierten Informationen weitergeleitet werden sollen. Dementsprechend werden Informationen an das Kommunikationsmodul 8 gegeben, welches an einen oder mehrere der Empfänger E die jeweiligen Informationen weiterleitet. Ein Beispiel hierfür wird weiter unten mit Bezug auf Fig. 4 gegeben werden.

Fig. 4 zeigt eine Tabelle mit Einträgen, wobei jeder Eintrag einer möglichen Kombination von Klassifikationen der drei Daten entspricht. Die Zeilen entsprechen drei Klassen A (erste Klasse), B (zweite Klasse), C (dritte Klasse) der Fahrerposition FP nach dem Zusammenstoß. Die mit ZI1, ZI2, ZI3, ZI4 beschrifteten Spalten entsprechen den vier Klassen der Zusammenstoßintensität ZI. Jede dieser Klassen ist nochmals unterteilt bezüglich der Klassifizierung des Fahrergesundheitszustands FGZ, wobei die mit Bezug auf Fig. 3 erläuterten Symbole verwendet werden.

Aus den insgesamt 36 Feldern können Muster definiert werden, wobei jedes Muster eine Anzahl der angezeigten Felder auswählt. Entspricht die Kombination von Klassifizierungen einem Feld, welches in einem Muster enthalten ist, kann vorgegeben werden, dass die entsprechend aggregierten Daten an einen oder mehrere vorbestimmte Empfänger E1, ... , E5 weitergeleitet werden. Somit können zum Beispiel besonders Daten eines schweren Zusammenstoßereignisses, angezeigt beispielsweise durch Zusammenstoßintensität in dritter oder vierter Klasse, an alle angegebenen Empfänger weitergeleitet werden, wohingegen beispielsweise Daten von Ereignissen, bei welchen der Fahrer 2 noch auf dem Fahrzeug 1 sitzt und der Puls normal ist, nur an eine Versicherungsagentur weitergeleitet werden.

Insgesamt wird durch die hierin beschriebene Vorgehensweise eine besonders praktikable und in der Praxis sinnvolle Information von geeigneten Empfängern über Zusammenstoßereignisse mit offenen Fahrzeugen ermöglicht, welche eine schnelle und geeignete Reaktion, insbesondere auch eine schnelle Hilfeleistung, ermöglicht.

Erwähnte Schritte des erfindungsgemäßen Verfahrens können in der angegebenen Reihenfolge ausgeführt werden. Sie können jedoch auch in einer anderen Reihenfolge ausgeführt werden, soweit dies technisch sinnvoll ist. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

Es sei darauf hingewiesen, dass in den Ansprüchen und in der Beschreibung Merkmale in Kombination beschrieben sein können, beispielsweise um das Verständnis zu erleichtern.

Rückbezüge in Unteransprüchen können bevorzugte Kombinationen der jeweiligen Merkmale kennzeichnen, schließen jedoch andere Merkmalskombinationen nicht aus.

### Bezugszeichenliste:

- 1: Fahrzeug
- 2: Fahrer
- 4: Verarbeitungseinheit
- 5: Datenaufnahmemodul
- 6: Auswertungsmodul
- 7: Entscheidungsmodul
- 8: Kommunikationsmodul
- 10: Satellitennavigationssystem
- 20: Funkmodul
- 25: weiteres Funkmodul
- 30: Drucksensor
- 40: Beschleunigungssensor
- 50: Pulsratensensor
- 60: Schallsensor
- E: Empfänger
- Pos: Position
- FP: Fahrerposition nach Zusammenstoß
- ZI: Zusammenstoßintensität
- FGZ: Fahrergesundheitszustand
- RF: Parameter für Distanz
- p: Parameter für Druck
- g: Beschleunigung
- t_{g}: Beschleunigungsschwellenwert
- SS: Schallintensität
- ts: Schallschwellenwert
- n: Kollisionsschwellenwert

## Patentansprüche

1. Verfahren zum Liefern von aggregierten Daten nach einem Zusammenstoßereignis eines offenen Fahrzeugs (1), wobei das Verfahren folgende Schritte aufweist:
- Bestimmen einer Position (Pos) des Fahrzeugs (1),
- Bestimmen von einem oder mehreren von Fahrerpositionen (FP) nach dem Zusammenstoß, Zusammenstoßintensität (ZI) und Fahrergesundheitszustand (FGZ),
- Bilden von aggregierten Daten basierend auf der bestimmten Position (Pos) und der bestimmten Fahrerposition (FP) nach dem Zusammenstoß, Zusammenstoßintensität (ZI) und/oder Fahrergesundheitszustand (FGZ), und
- Senden der aggregierten Daten zu einem Empfänger (E), **dadurch gekennzeichnet,**
- **dass** die Zusammenstoßintensität (ZI) in eine von vier Klassen klassifiziert wird,
- wobei die Zusammenstoßintensität (ZI) in eine erste Klasse klassifiziert wird, wenn ein Beschleunigungssensor (40) einen Zusammenstoß mit niedriger Geschwindigkeit anzeigt und ein Schallsensor (60) eine Anzahl von Zusammenstößen unterhalb eines Kollisionsschwellenwerts (n) anzeigt,
- wobei die Zusammenstoßintensität (ZI) in eine zweite Klasse klassifiziert wird, wenn ein Beschleunigungssensor (40) einen Zusammenstoß mit niedriger Geschwindigkeit anzeigt und ein Schallsensor (60) eine Anzahl von Zusammenstößen mindestens so groß wie der Kollisionsschwellenwert (n) anzeigt,
- wobei die Zusammenstoßintensität (ZI) in eine dritte Klasse klassifiziert wird, wenn ein Beschleunigungssensor (40) einen Zusammenstoß mit hoher Geschwindigkeit anzeigt und ein Schallsensor (60) eine Anzahl von Zusammenstößen unterhalb des Kollisionsschwellenwerts (n) anzeigt, und/oder
- wobei die Zusammenstoßintensität (ZI) in eine vierte Klasse klassifiziert wird, wenn ein Beschleunigungssensor (40) einen Zusammenstoß mit hoher Geschwindigkeit anzeigt und ein Schallsensor (60) eine Anzahl von Zusammenstößen mindestens so groß wie der Kollisionsschwellenwert (n) anzeigt.

2. Verfahren nach Anspruch 1,
- wobei die Fahrerposition (FP) nach dem Zusammenstoß, Zusammenstoßintensität (ZI) und Fahrergesundheitszustand (FGZ) bestimmt werden und die aggregierten Daten basierend darauf gebildet werden.

3. Verfahren nach einem der vorhergehenden Ansprüche,
- wobei die Fahrerposition (FP) nach dem Zusammenstoß bestimmt wird
- unter Verwendung eines Funkmoduls (20) in dem Fahrzeug (1) und eines Funkmoduls (25), welches von dem Fahrer (2) getragen wird,
und/oder
- unter Verwendung eines Drucksensors (30), welcher sensiert, ob der Fahrer (2) auf einem Sitz positioniert ist.

4. Verfahren nach einem der vorhergehenden Ansprüche,
- wobei die Zusammenstoßintensität (ZI) bestimmt wird
- unter Verwendung mindestens eines Beschleunigungssensors (40), und/oder
- unter Verwendung mindestens eines Schallsensors (60).

5. Verfahren nach einem der vorhergehenden Ansprüche,
- wobei der Fahrergesundheitszustand (FGZ) unter Verwendung eines Pulsratensensors (50) bestimmt wird.

6. Verfahren nach einem der vorhergehenden Ansprüche,
- wobei die Fahrerposition (FP) nach dem Zusammenstoß in eine von drei Klassen klassifiziert wird, welche eine Distanz zwischen dem Fahrer (2) und dem Fahrzeug (1) nach dem Zusammenstoßereignis anzeigen.

7. Verfahren nach Anspruch 6,
- wobei die Fahrerposition (FP) nach dem Zusammenstoß in eine erste Klasse klassifiziert wird, wenn ein Drucksensor (30) anzeigt, dass der Fahrer (2) auf dem Fahrzeug (1) sitzt,
- wobei die Fahrerposition (FP) nach dem Zusammenstoß in eine zweite Klasse klassifiziert wird, wenn ein Drucksensor (30) anzeigt, dass der Fahrer (2) nicht auf dem Fahrzeug (1) sitzt, und Funkmodule (20, 25) anzeigen, dass eine Distanz zwischen dem Fahrzeug (1) und dem Fahrer (2) unter einem Distanzschwellenwert ist,
und/oder
- wobei die Fahrerposition (FP) nach dem Zusammenstoß in eine dritte Klasse klassifiziert wird, wenn ein Drucksensor (30) anzeigt, dass der Fahrer (2) nicht auf dem Fahrzeug (1) sitzt, und Funkmodule (20, 25) anzeigen, dass eine Distanz zwischen dem Fahrzeug (1) und dem Fahrer (2) mindestens so groß ist wie der Distanzschwellenwert.

8. Verfahren nach einem der vorhergehenden Ansprüche,
- wobei der Beschleunigungssensor (40) einen Zusammenstoß mit niedriger Geschwindigkeit anzeigt, wenn eine maximale Beschleunigung (g) während eines Zusammenstoßereignisses unter einem Beschleunigungsschwellenwert (t_{g}) ist, und
- wobei der Beschleunigungssensor (40) einen Zusammenstoß bei hoher Geschwindigkeit anzeigt, wenn eine maximale Beschleunigung (g) während eines Zusammenstoßereignisses mindestens so groß ist wie der Beschleunigungsschwellenwert (t_{g}).

9. Verfahren nach einem der einem der vorhergehenden Ansprüche,
- wobei der Schallsensor (60) einen Zusammenstoß jedes Mal anzeigt, wenn die Schallintensität (SS) einen Schallschwellenwert (ts) übersteigt.

10. Verfahren nach einem der vorhergehenden Ansprüche, wobei der Fahrergesundheitszustand (FGZ) in eine von drei Klassen klassifiziert wird.

11. Verfahren nach einem der Ansprüche 6 bis 10,
- wobei eines oder mehrere Muster definiert wird, wobei jedes Muster eine Kombination von Klassen definiert, und
- wobei die aggregierten Daten zu einem bestimmten Empfänger (E) weitergeleitet werden, welcher dem Muster zugeordnet ist, wenn alle Parameter in eine Klasse klassifiziert sind, welche in Kombination durch das Muster definiert werden.

12. Verfahren nach einem der Ansprüche 6 bis 11,
- wobei die aggregierten Daten mit Bezug auf Fahrerposition (FP) nach dem Zusammenstoß, Zusammenstoßintensität (ZI) und Fahrergesundheitszustand (FGZ) nur aus Indikationen von Klassen gebildet werden, in welche die Fahrerposition (FP) nach dem Zusammenstoß, die Zusammenstoßintensität (ZI) und der Fahrergesundheitszustand (FGZ) klassifiziert wurden.

13. Verfahren nach einem der vorhergehenden Ansprüche,
- wobei die Position (Pos) bestimmt wird unter Verwendung eines Satellitennavigationssystems (10) in dem Fahrzeug (1).

14. Offenes Fahrzeug (1), mit einem Beschleunigungssensor (40) und einem Schallsensor (60), wobei das offene Fahrzeug (1) konfiguriert ist, um ein Verfahren gemäß einem der vorhergehenden Ansprüche auszuführen, wobei die Daten des Beschleunigungssensor (40) und des Schallsensors (60) zur Klassifizierung der Zusammenstoßintensität verwendet werden.

## Claims

1. Method for supplying aggregated data after an impact event of an open vehicle (1), wherein the method comprises the following steps:
- determining a position (Pos) of the vehicle (1),
- determining one or more driver positions (FP) after the impact, impact intensity (ZI) and driver health condition (FGZ),
- forming aggregated data based on the determined position (Pos) and the determined driver position (FP) after the impact, impact intensity (ZI) and/or driver health condition (FGZ), and
- transmitting the aggregated data to a receiver (E), **characterized in that**
- the impact intensity (ZI) is classified into one of four classes,
- wherein the impact intensity (ZI) is classified into a first class when an acceleration sensor (40) indicates an impact at a low speed and an acoustic sensor (60) indicates a number of impacts below a collision threshold value (n),
- wherein the impact intensity (ZI) is classified into a second class when an acceleration sensor (40) indicates an impact at a low speed and an acoustic sensor (60) indicates a number of impacts at least as great as the collision threshold value (n),
- wherein the impact intensity (ZI) is classified into a third class when an acceleration sensor (40) indicates an impact at a high speed and an acoustic sensor (60) indicates a number of impacts below the collision threshold value (n), and/or
- wherein the impact intensity (ZI) is classified into a fourth class when an acceleration sensor (40) indicates an impact at a high speed and an acoustic sensor (60) indicates a number of impacts at least as great as the collision threshold value (n).

2. Method according to Claim 1,
- wherein the driver position (FP) after the impact, impact intensity (ZI) and driver health condition (FGZ) are determined and the aggregated data are formed based thereon.

3. Method according to one of the preceding claims,
- wherein the driver position (FP) after the impact is determined
- using a radio module (20) in the vehicle (1) and a radio module (25) which is worn by the driver (2),
and/or
- using a pressure sensor (30) which senses whether the driver (2) is positioned on a seat.

4. Method according to one of the preceding claims,
- wherein the impact intensity (ZI) is determined
- using at least one acceleration sensor (40),
and/or
- using at least one acoustic sensor (60).

5. Method according to one of the preceding claims,
- wherein the driver health condition (FGZ) is determined using a pulse rate sensor (50).

6. Method according to one of the preceding claims,
- wherein the driver position (FP) after the impact is classified into one of three classes which indicate a distance between the driver (2) and the vehicle (1) after the impact event.

7. Method according to Claim 6,
- wherein the driver position (FP) after the impact is classified into a first class when a pressure sensor (30) indicates that the driver (2) is sitting on the vehicle (1),
- wherein the driver position (FP) after the impact is classified into a second class when a pressure sensor (30) indicates that the driver (2) is not sitting on the vehicle (1) and radio modules (20, 25) indicate that a distance between the vehicle (1) and the driver (2) is below a distance threshold value,
and/or
- wherein the driver position (FP) after the impact is classified into a third class when a pressure sensor (30) indicates that the driver (2) is not sitting on the vehicle (1) and radio modules (20, 25) indicate that a distance between the vehicle (1) and the driver (2) is at least as great as the distance threshold value.

8. Method according to one of the preceding claims,
- wherein the acceleration sensor (40) indicates an impact at a low speed when a maximum acceleration (g) during an impact event is below an acceleration threshold value (t_{g}), and
- wherein the acceleration sensor (40) indicates an impact at a high speed when a maximum acceleration (g) during an impact event is at least as great as the acceleration threshold value (t_{g}).

9. Method according to one of the preceding claims,
- wherein the acoustic sensor (60) indicates an impact each time the acoustic intensity (SS) exceeds an acoustic threshold value (ts).

10. Method according to one of the preceding claims, wherein the driver health condition (FGZ) is classified into one of three classes.

11. Method according to one of Claims 6 to 10,
- wherein one or more patterns is defined, wherein each pattern defines a combination of classes, and
- wherein the aggregated data are forwarded to a particular receiver (E) which is assigned to the pattern when all parameters which in combination are defined by the pattern are classified into one class.

12. Method according to one of Claims 6 to 11,
- wherein the aggregated data in relation to driver position (FP) after the impact, impact intensity (ZI) and driver health condition (FGZ) are formed only from indications of classes into which the driver position (FP) after the impact, the impact intensity (ZI) and the driver health condition (FGZ) have been classified.

13. Method according to one of the preceding claims,
- wherein the position (Pos) is determined using a satellite navigation system (10) in the vehicle (1).

14. Open vehicle (1), having an acceleration sensor (40) and an acoustic sensor (60), wherein the open vehicle (1) is configured to carry out a method according to one of the preceding claims, wherein the data of the acceleration sensor (40) and the acoustic sensor (60) are used to classify the impact intensity.

## Revendications

1. Procédé pour fournir des données agrégées après un événement de collision d'un véhicule ouvert (1), le procédé comprenant les étapes suivantes :
- détermination d'une position (Pos) du véhicule (1),
- détermination d'une ou plusieurs positions du conducteur (FP) après la collision, de l'intensité de la collision (ZI) et de l'état de santé du conducteur (FGZ),
- création de données agrégées basées sur la position déterminée (Pos) et la position déterminée du conducteur (FP) après la collision, l'intensité de la collision (ZI) et/ou l'état de santé du conducteur (FGZ), et
- envoi des données agrégées à un destinataire (E), **caractérisé en ce**
- **que** l'intensité de collision (ZI) est classée dans une parmi quatre catégories,
- l'intensité de collision (ZI) étant classée dans une première catégorie lorsqu'un capteur d'accélération (40) indique une collision à faible vitesse et qu'un capteur acoustique (60) indique un nombre de collisions inférieur à une valeur de seuil de collision (n),
- l'intensité de collision (ZI) étant classée dans une deuxième catégorie lorsqu'un capteur d'accélération (40) indique une collision à faible vitesse et qu'un capteur acoustique (60) indique un nombre de collisions au moins égal à la valeur de seuil de collision (n),
- l'intensité de collision (ZI) étant classée dans une troisième catégorie lorsqu'un capteur d'accélération (40) indique une collision à vitesse élevée et qu'un capteur acoustique (60) indique un nombre de collisions inférieur à la valeur de seuil de collision (n),
- l'intensité de collision (ZI) étant classée dans une quatrième catégorie lorsqu'un capteur d'accélération (40) indique une collision à vitesse élevée et qu'un capteur acoustique (60) indique un nombre de collisions au moins égal à la valeur de seuil de collision (n).

2. Procédé selon la revendication 1,
- la position du conducteur (FP) après la collision, l'intensité de la collision (ZI) et l'état de santé du conducteur (FGZ) étant déterminés et les données agrégées étant formées sur la base de ces informations.

3. Procédé selon l'une des revendications précédentes,
- la position du conducteur (FP) étant déterminée après la collision
- en utilisant un module radio (20) dans le véhicule (1) et un module radio (25) qui est porté par le conducteur (2),
et/ou
- en utilisant un capteur de pression (30), lequel détecte si le conducteur (2) est positionné sur un siège.

4. Procédé selon l'une des revendications précédentes,
- l'intensité de collision (ZI) étant déterminée
- en utilisant au moins un capteur d'accélération (40),
et/ou
- en utilisant au moins un capteur acoustique (60).

5. Procédé selon l'une des revendications précédentes,
- l'état de santé du conducteur (FGZ) étant déterminé en utilisant un capteur de fréquence cardiaque (50).

6. Procédé selon l'une des revendications précédentes,
- la position du conducteur (FP) après la collision étant classée dans une de trois catégories, lesquelles indiquent la distance entre le conducteur (2) et le véhicule (1) après l'événement de collision.

7. Procédé selon la revendication 6,
- la position du conducteur (FP) étant classée dans une première catégorie après la collision si un capteur de pression (30) indique que le conducteur (2) est assis dans le véhicule (1),
- la position du conducteur (FP) étant classée dans une deuxième catégorie après la collision si un capteur de pression (30) indique que le conducteur (2) n'est pas assis dans le véhicule (1) et les modules radio (20, 25) indiquent qu'une distance entre le véhicule (1) et le conducteur (2) est inférieure à une valeur de seuil de distance,
et/ou
- la position du conducteur (FP) étant classée dans une troisième catégorie après la collision si un capteur de pression (30) indique que le conducteur (2) n'est pas assis dans le véhicule (1) et les modules radio (20, 25) indiquent qu'une distance entre le véhicule (1) et le conducteur (2) est au moins égale à la valeur de seuil de distance.

8. Procédé selon l'une des revendications précédentes,
- le capteur d'accélération (40) indiquant une collision à faible vitesse lorsqu'une accélération maximale (g) pendant un événement de collision est inférieure à une valeur de seuil d'accélération (t_{g}) ; et
- le capteur d'accélération (40) indiquant une collision à vitesse élevée lorsqu'une accélération maximale (g) pendant un événement de collision est au moins égale à la valeur de seuil d'accélération (t_{g}).

9. Procédé selon l'une des revendications précédentes,
- le capteur acoustique (60) signalant une collision chaque fois que l'intensité sonore (SS) dépasse une valeur de seuil sonore (ts).

10. Procédé selon l'une des revendications précédentes, l'état de santé du conducteur (FGZ) étant classé dans une de trois catégories.

11. Procédé selon l'une des revendications 6 à 10,
- un ou plusieurs modèles étant définis, chaque modèle définissant une combinaison de catégories, et
- les données agrégées étant retransmises à un destinataire (E) déterminé, lequel est attribué au modèle lorsque tous les paramètres sont classés dans une catégorie qui est définie en combinaison par le modèle.

12. Procédé selon l'une des revendications 6 à 11,
- les données agrégées relatives à la position du conducteur (FP) après la collision, à l'intensité de la collision (ZI) et à l'état de santé du conducteur (FGZ) étant uniquement constituées d'indications de catégories dans lesquelles la position du conducteur (FP) après la collision, l'intensité de la collision (ZI) et l'état de santé du conducteur (FGZ) ont été classées.

13. Procédé selon l'une des revendications précédentes,
- la position (Pos) étant déterminée en utilisant un système de navigation par satellite (10) dans le véhicule (1).

14. Véhicule ouvert (1) comprenant un capteur d'accélération (40) et un capteur acoustique (60), le véhicule ouvert (1) étant configuré pour mettre en œuvre un procédé selon l'une des revendications précédentes, les données du capteur d'accélération (40) et du capteur acoustique (60) étant utilisées pour classer l'intensité de la collision.
